# EUROPEAN PATENT SPECIFICATION

(11) **EP 4 386 931 B1**
(45) Date of publication and mention of the grant of the patent: **23.04.2025**
(21) Application number: 22214053.5
(22) Date of filing: 16.12.2022
(51) Int. Cl.: H01M 10/42, H01M 50/284, H01M 50/505, H01M 50/512, H01M 50/516, H01M 50/522, H01M 50/526, H01M 50/528, H01M 50/562

(54) **BATTERY MODULE AND BATTERY**
BATTERIEMODUL UND BATTERIE
MODULE DE BATTERIE ET BATTERIE

(43) Date of publication of application: 19.06.2024
(73) Proprietor: Ioncor Oy, 23500 Uusikaupunki (FI)
(72) Inventor: Hirvonen, Risto, 24100 Salo (FI); Kopra, Lasse, 23501 Uusikaupunki (FI); Forstén, Atso, 21570 Sauvo (FI)
(74) Representative: Papula Oy

(56) References cited:
- WO-A1-2016/040040
- WO-A1-2017/062886
- US-A1- 2012 000 964

## Description

### BACKGROUND

The invention relates to a battery module.

The invention further relates to a battery.

In batteries, such as in automotive batteries, battery cells have normally aluminium terminals that are laser welded to aluminium busbars connecting the cells to electrical circuit of the battery. The electrical circuit is mainly made of copper, and therefore the two conductive materials (aluminium and copper) must have a connection somewhere in the battery. Aluminum/copper connection is prone to electrochemical corrosion and resistance growth, which in time provides heat and potentially ages the battery cells prematurely. It is known to solve this problem by coating the aluminum and copper with the same coating, e.g. nickel and tin. A problem in this solution is that the busbar connected to battery cell terminals by laser welding may though not have said coating present when the welding takes place, since the Ni-Sn coating will gasify in the heat of the welding, which causes porosity in the welding and ruins the electrical connection therein. Therefore, said coating has to be removed prior to the welding. This causes lot of costs.

Such interconnects and interconnecting methods are for example described in WO 2017/062886 A1, WO 2016/040040 A1 and US 2012/000964 A1.

### BRIEF DESCRIPTION

Viewed from a first aspect, there can be provided a battery module comprising plurality of battery cells, the battery cell comprising a terminal made of aluminium or aluminium alloy, a busbar made of aluminium or aluminium alloy, the busbar being arranged for interconnecting terminals in a same electrical polarity of said plurality of battery cells in an electrically conductive way, the busbar further arranged for connecting the plurality of battery cells to an electrical conductor element made of copper or copper alloy, wherein the busbar comprises a purposely passivated surface.

Thereby a battery module that can be assembled without expensive steps of removing or processing the busbar surface prior to its attachment to the terminals may be achieved. Viewed from a further aspect, there can be provided a battery, comprising the battery module as defined above. Thereby a battery that can be assembled without expensive steps of removing or processing the busbar surface prior to its attachment to the terminals may be achieved.

The battery module and the battery are characterised by what is stated in the independent claims. Some other embodiments are characterised by what is stated in the other claims.

The purposely passivated surface of the busbar comprises a conversion coating.

An advantage is that the coating not only provides electrically conductive but also a corrosion resistant coating.

In one embodiment, the conversion coating comprises zirconium Zr, fluorine F, and chromium Cr.

An advantage is that a high surface conductivity of the busbar may be achieved. Further, said high surface conductivity is long lasting and stands well variations in ambient conditions. Still further, said conversion coating improves the quality of welding, especially laser welding, where the busbar is welded to the terminal, since oxides and water on the surfaces are substantially avoided. Thus, an excellent conductivity between the busbar and the terminal may be achieved.

In one embodiment, the conversion coating comprises zirconium Zr, titanium Ti, and chromium Cr.

An advantage is that a high surface conductivity of the busbar may be achieved. Additionally, said high surface conductivity is long lasting and stands well variations in ambient conditions. Still further, said conversion coating improves the quality of welding, especially laser welding, where the busbar is welded to the terminal, since oxides and water on the surfaces are substantially avoided. Thus, an excellent conductivity between the busbar and the terminal may be achieved.

In one embodiment, the thickness of the passivated surface is in range of 0.5 - 1 µm.

An advantage is that said thickness is sufficient to prevent or at least substantially delay corrosion of the surface while being as thin as possible on order to ensure good electrical conductivity between the connected surfaces.

In one embodiment, the battery module comprises a welded joint attaching the terminal to the busbar, preferably a laser welded joint.

An advantage is that a precise electrically conductive joint may be achieved.

In one embodiment, the electrical conductor element comprises a conductor surface having a Ni-Sn coating, and the busbar is attached to said surface.

An advantage is that tin provides good corrosion resistance and as a plastic material adapts to surface contour of the busbar, thereby a hermetic junction may be achieved. Nickel creates a diffusion-preventing barrier that prevents dissolving tin and copper to each other and thus may maintain good conductivity between the busbar and the electrical conductor element.

In one embodiment, the electrical conductor element comprises a conductor surface having an OSP (Organic Solderability Preservative) coating, and the busbar is attached to said surface.

An advantage is that a very thin coating where the thickness is in order of molecular dimensions for ensuring good electrical conductivity between the connected surfaces may be achieved.

In one embodiment, the electrical conductor element comprises a conductor surface having a palladium (Pd) coating, and the busbar is attached to said surface.

An advantage is that it is possible to manufacture very thin coating, since palladium can be provided highly impurity-free grades, and thus good electrical conductivity between the connected surfaces may be achieved. Further, palladium does not dissolve with substances and compounds typically present in batteries.

In one embodiment, the busbar is attached to the electrical conductor element by a mechanical fastening device, such as a threaded fastening device or rivet.

An advantage is that a reliable and simple attachment of the busbar and the electrical conductor element may be achieved.

In one embodiment, it provided a sufficient pressing force between the contacting surfaces of the busbar and the electrical conductor element.

An advantage is that an optimal electrically conductive contact between the busbar is attached to the electrical conductor element may be achieved.

In one embodiment, the purposely passivated surface comprises zirconium Zr, fluorine F and chromium Cr, the conductor surface of the electrical conductor element has an OSP coating, and said surfaces are attached to each other.

An advantage is that an optimal combination of electrically conductive surfaces between the busbar and the electrical conductor may be achieved.

### BRIEF DESCRIPTION OF FIGURES

Some embodiments illustrating the present disclosure are described in more detail in the attached drawings, in which
Figure 1 is a schematic view of a battery and battery module,
Figure 2 is a schematic view of a detail of the battery and battery module shown in Figure 1, and
Figure 3 is a schematic view of another detail of the battery and battery module shown in Figure 1.

In the figures, some embodiments are shown simplified for the sake of clarity. Similar parts are marked with the same reference numbers in the figures.

### DETAILED DESCRIPTION

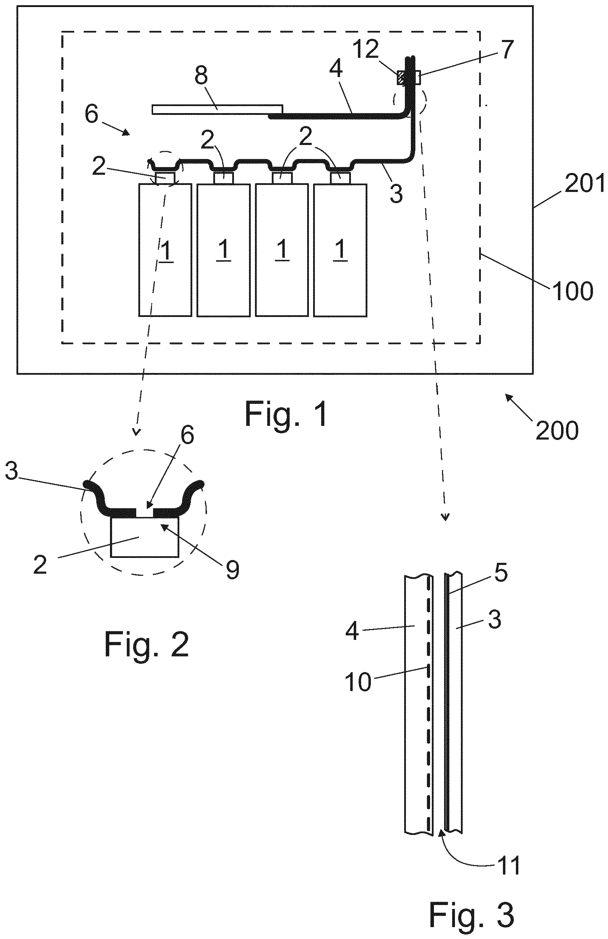

**Figure 1** is a schematic view of a battery and battery module, **Figure 2** is a schematic view of a detail of the battery and battery module shown in Figure 1, and **Figure 3** is a schematic view of another detail of the battery and battery module shown in Figure 1.

In one embodiment, the battery 200 is a drive battery of a fully or partly electricity-driven vehicle, such as a car. In one embodiment, the battery 200 is a battery of a stationary electricity source.

The battery module 100 (shown by dashed lines in Figure 1) is arranged in the battery 200. The battery 200 may comprise many battery modules 100 and other modules arranged in a battery casing 201 that is arranged to protect components of the battery 200.

The battery module 100 comprises plurality of battery cells 1. The battery cell has a terminal 2 made of aluminium or aluminium alloy. The terminal 2 is the electrical contact that is used to connect a load or charger to the corresponding battery cell.

The battery cells 1 may constitute a cell stack (not shown), and the battery module 100 may comprise one or plurality of said cell stacks.

The battery module 100 further comprises a busbar 3, typically plurality of busbars, that is made of aluminium or aluminium alloy. The busbar 3 is arranged for interconnecting terminals 2 in a same electrical polarity of said plurality of battery cells 1 in an electrically conductive way.

In one embodiment, the busbar 3 is attached and connected to the terminals 2 by a welded joint 6. In one embodiment, the welded joint 6 is a laser welded joint, i.e. the made by a laser welding method. Prior to welding, there is no need for a process step where the surface of the busbar 3 to be welded is removed or processed, since the purposely passivated surface 5 does not cause harm to the welding process. Just normal cleaning of the surfaces is sufficient. This reduces significantly manufacturing costs of the battery module.

In one embodiment, such as shown in Figure 2, the busbar 3 comprises a hole 9 that is positioned on the corresponding terminal 2. The hole 9 facilitates welding of the busbar to the terminal. However, in some embodiments, there is not such a hole present.

Additionally, the busbar 3 is connected to an electrical conductor element 4 so that an electrical connection is provided between the plurality of battery cells connected to thereto and to said electrical conductor element 4. The electrical conductor element 4 is made of copper or copper alloy.

The busbar 3 comprises a purposely passivated surface 5, such as shown in Figure 3. In Figure 3 the purposely passivated surface 5 is shown on one surface of the busbar only. In another embodiment, all surfaces of the busbar 3 are covered by the purposely passivated surface 5. In still another embodiment, not all but those surfaces of the busbar 3 that are in contact with the electrical conductor element 4 comprises the purposely passivated surface 5. In still another embodiment, not all but those surfaces of the busbar 3 that are in contact with the electrical conductor element 4 and the terminal(s) 2 comprises the purposely passivated surface.

In one embodiment, such as shown in Figure 1, the busbar 3 is attached to the electrical conductor element 4 by at least one mechanical fastening device 7 so that the surface of the busbar having the purposely passivated surface 5 is pressed or forced against the electrical conductor element 4. It is to be noted that the busbar 3 and the electrical conductor element 4 are show as having a gap 11 therebetween in Figure 3 in order to clarify the distinction of said two components. But as disclosed above, in the battery module (as well as in the battery) the busbar 3 and the electrical conductor element 4 are in contact with each other, typically pressed or forced against each other.

In one embodiment, the mechanical fastening device 7 is a threaded fastening device, such as a screw or a bolt. The counterpart thread of the screw or the bolt may be manufactured to the busbar 3 and/or the electrical conductor element 4, or there may be a separate component therefor, such as a nut, a threaded sleeve or a screw bushing 12.

In one embodiment, the mechanical fastening device 7 is a rivet.

The mechanical fastening device 7 provides a certain pressing force between the surfaces of the busbar 3 and the electrical conductor element 4 contacting each other. As already described, the busbar comprises the purposely passivated surface 5. The purposely passivated surface 5 comprises a conversion coating. The conversion coating is a type of coating used on metals in which the surface that is covered is turned into a coating with electrochemical or chemical processes.

In one embodiment, the conversion coating comprises zirconium Zr, fluorine F, and chromium Cr.

In one embodiment, the conversion coating comprises zirconium Zr, titanium Ti, and chromium Cr.

In one embodiment, the conversion coating is made of compound known as Candor E-CLPS^{®}.

In one embodiment, the conversion coating is manufactured by process known as Iridite NCP^{®}.

In one embodiment, the conversion coating is made of compound known as Surtec 650^{®}.

In one embodiment, the thickness of the passivated surface 5 is in range of 0.5 - 1 µm.

In one embodiment, the purposely passivated surface 5 is manufactured by:
a) washing the surface to be passivated for removing greases, carbon-containing substances etc.,
b) treating the washed surface with alkaline solution that etches and smooths aluminium surface,
c) pickling with acid in order to homogenize the surfaces, and
d) dipping the surface in solution that creates the passivated surface.

In one embodiment, the electrical conductor element 4 made of copper or copper alloy has a conductor surface 10, and the busbar 3 is attached to said conductor surface. In one embodiment, the conductor surface 10 comprises a nickeltin (Ni-Sn) coating or plating. In one embodiment, the thickness of said Ni-Sn coating is in range of 0.5 - 2 µm.

In one embodiment, the conductor surface 10 comprises an Organic Solderability Preservative (OSP) coating. This coating may necessitate a stable, constant and sufficient compressive pressure between the electrical conductor element 4 and the busbar 3. This pressure may be secured by mechanical fastening devices 7, for instance.

In one embodiment, the conductor surface 10 comprises palladium (Pd) coating.

In one embodiment, the purposely passivated surface 5 comprises zirconium Zr, fluorine F and chromium Cr, and the conductor surface 10 of the electrical conductor element 4 has an OSP coating, and said surfaces 5, 10 are attached to each other.

In one embodiment, the electrical conductor element 4 electrically connects the busbar 3 to a circuitry 8. In one embodiment, the circuitry 8 is a circuit board. In one embodiment, the circuit board is a printed circuit board. The connection may be a direct one (such as shown in Fig-ure 1), i.e. the electrical conductor element 4 is connected directly to the circuitry 8 without any intermediary components. In another embodiment, there is at least one transmission component or conductor element arranged for conducting electricity between the busbar 3 and the circuitry 8.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1: battery cell
- 2: terminal
- 3: busbar
- 4: electrical conductor element
- 5: purposely passivated surface
- 6: welded joint
- 7: mechanical fastening device
- 8: circuitry
- 9: hole
- 10: conductor surface
- 11: gap
- 12: threaded sleeve

- 100: battery module
- 200: battery
- 201: battery casing

## Claims

1. A battery module (100) comprising
- plurality of battery cells (1),
- the battery cell comprising a terminal (2) made of aluminium or aluminium alloy,
- a busbar (3) made of aluminium or aluminium alloy, the busbar being arranged for interconnecting terminals (2) in a same electrical polarity of said plurality of battery cells (1) in an electrically conductive way,
- the busbar (3) further arranged for connecting the plurality of battery cells to an electrical conductor element (4) made of copper or copper alloy, wherein
- the busbar (3) comprises a purposely passivated surface (5) that comprises a conversion coating.

2. The battery module as claimed in claim 1, wherein
- the conversion coating comprises zirconium Zr, fluorine F, and chromium Cr.

3. The battery module as claimed in claim 1, wherein
- the conversion coating comprises zirconium Zr, titanium Ti, and chromium Cr.

4. The battery module as claimed in any of the preceding claims, wherein
- the thickness of the passivated surface (5) is in range of 0.5 - 1 µm.

5. The battery module as claimed in any of the preceding claims, comprising
- a welded joint (6) attaching the terminal (2) to the busbar (3).

6. The battery module as claimed in claim 5, wherein
- the welded joint (6) is a laser welded joint.

7. The battery module as claimed in any of the preceding claims, wherein
- the electrical conductor element (4) comprises a conductor surface (10) having a Ni-Sn coating or OSP (Organic Solderability Preservative) coating or palladium (Pd) coating, and
- the busbar (3) is attached to said surface.

8. The battery module as claimed in any of the preceding claims, wherein
- the busbar (3) is attached to the electrical conductor element (4) by a mechanical fastening device (7), such as a threaded fastening device or rivet.

9. The battery module as claimed in claim 8, comprising
- providing a pressing force between the contacting surfaces of the busbar (3) and the electrical conductor element (4).

10. The battery module as claimed in any of the preceding claims, wherein
- the purposely passivated surface comprising zirconium Zr, fluorine and chromium Cr,
- the conductor surface (10) of the electrical conductor element (4) having an OSP coating, and
- said surfaces being attached to each other.

11. A battery (200), comprising
- at least one battery module (100) as claimed in any of the preceding claims.

12. The battery as claimed in claim 11, being
- a drive battery of a fully or partly electricity-driven vehicle.

13. The battery as claimed in claim 11, being a battery of a stationary electricity source.

## Patentansprüche

1. Batteriemodul (100), umfassend:
- Mehrzahl von Batteriezellen (1),
- wobei die Batteriezelle einen Anschluss (2) umfasst, der aus Aluminium oder einer Aluminiumlegierung hergestellt ist,
- eine Sammelschiene (3), die aus Aluminium oder einer Aluminiumlegierung hergestellt ist,
wobei die Sammelschiene dazu ausgelegt ist, dass sie Anschlüsse (2) mit gleicher elektrischer Polarität der Mehrzahl von Batteriezellen (1) auf elektrisch leitfähige Weise miteinander verbindet,
- wobei die Sammelschiene (3) ferner zum Verbinden der Mehrzahl von Batteriezellen an ein elektrisches Leiterelement (4) ausgelegt ist, das aus Kupfer oder Kupferlegierung hergestellt ist, wobei
- die Sammelschiene (3) eine absichtlich passivierte Oberfläche (5) umfasst, die eine Konversionsbeschichtung umfasst.

2. Batteriemodul nach Anspruch 1, wobei
- die Konversionsbeschichtung Zirkonium Zr, Fluor F, und Chrom Cr umfasst.

3. Batteriemodul nach Anspruch 1, wobei
- die Konversionsbeschichtung Zirkonium Zr, Titan Ti und Chrom Cr umfasst.

4. Batteriemodul nach einem der vorhergehenden Ansprüche, wobei
- die Dicke der passivierten Oberfläche (5) im Bereich von 0.5 - 1 µm liegt.

5. Batteriemodul nach einem der vorhergehenden Ansprüche, umfassend
- eine Schweißverbindung (6), die den Anschluss (2) an der Sammelschiene (3) anbringt.

6. Batteriemodul nach Anspruch 5, wobei
- die Schweißverbindung (6) eine lasergeschweißte Verbindung ist.

7. Batteriemodul nach einem der vorhergehenden Ansprüche, wobei
- das elektrische Leiterelement (4) eine Leiteroberfläche (10) umfasst, die eine Ni-Sn-Beschichtung oder OSP (Organic Solderability Preservative) Beschichtung oder Palladium (Pd) Beschichtung aufweist, und
- die Sammelschiene (3) an der Oberfläche angebracht ist.

8. Batteriemodul nach einem der vorhergehenden Ansprüche, wobei
- die Sammelschiene (3) an das elektrische Leiterelement (4) durch ein mechanisches Befestigungsmittel (7), wie beispielsweise ein Befestigungsmittel mit Gewinde oder Niete, angebracht ist.

9. Batteriemodul nach Anspruch 8, umfassend
- Bereitstellen einer Druckkraft zwischen den Kontaktoberflächen der Sammelschiene (3) und dem elektrischen Leiterelement (4).

10. Batteriemodul nach einem der vorhergehenden Ansprüche, wobei
- die absichtlich passivierte Oberfläche Zirkonium Zr, Fluor und Chrom Cr umfasst,
- die Leiteroberfläche (10) des elektrischen Leiterelements (4) eine OSP Beschichtung aufweist, und
- die Oberflächen aneinander angebracht sind.

11. Batterie (200), umfassend
- mindestens ein Batteriemodul (100) nach einem der vorhergehenden Ansprüche.

12. Batterie nach Anspruch 11, wobei die Batterie eine Antriebsbatterie eines vollständig oder teilweise elektrisch angetriebenen Fahrzeugs ist.

13. Batterie nach Anspruch 11, wobei die Batterie eine Batterie einer stationären elektrischen Quelle ist.

## Revendications

1. Module de batterie (100) comprenant
- une pluralité d'éléments de batterie (1),
- l'élément de batterie comprenant une borne (2) en aluminium ou en alliage d'aluminium,
- un jeu de barres (3) en aluminium ou en alliage d'aluminium, le jeu de barres étant adapté pour interconnecter des bornes (2) de même polarité électrique de ladite pluralité d'éléments de batterie (1) de manière à ce qu'elles soient électriquement conductrices,
- le jeu de barres (3) étant en outre agencé pour connecter la pluralité d'éléments de batterie à un élément conducteur électrique (4) en cuivre ou en alliage de cuivre, dans lequel
- le jeu de barres (3) comprend une surface passivée à dessein (5) qui comprend un revêtement de conversion.

2. Module de batterie selon la revendication 1, dans lequel
- le revêtement de conversion comprend du zirconium Zr, du fluor F, et du chrome Cr.

3. Module de batterie selon la revendication 1, dans lequel
- le revêtement de conversion comprend du zirconium Zr, du titane Ti, et du chrome Cr.

4. Module de batterie selon l'une quelconque des revendications précédentes, dans lequel
- l'épaisseur de la surface passivée (5) se situe dans une plage de 0,5 à 1 µm.

5. Module de batterie selon l'une quelconque des revendications précédentes, comprenant
- un joint soudé (6) fixant la borne (2) au jeu de barres (3).

6. Module de batterie selon la revendication 5, dans lequel
- le joint soudé (6) est un joint soudé au laser.

7. Module de batterie selon l'une quelconque des revendications précédentes, dans lequel
- l'élément conducteur électrique (4) comprend une surface conductrice (10) présentant un revêtement Ni-Sn ou un revêtement OSP (conservateur de soudabilité organique) ou un revêtement de palladium (Pd), et
- le jeu de barres (3) est fixé à ladite surface.

8. Module de batterie selon l'une quelconque des revendications précédentes, dans lequel
- le jeu de barres (3) est fixé à l'élément conducteur électrique (4) par un dispositif de fixation mécanique (7), tel qu'un dispositif de fixation fileté ou un rivet.

9. Module de batterie selon la revendication 8, comprenant
- une fourniture d'une force de pression entre les surfaces de contact du jeu de barres (3) et l'élément conducteur électrique (4).

10. Module de batterie selon l'une quelconque des revendications précédentes, dans lequel
- la surface passivée à dessein comprenant du zirconium Zr, du fluor et du chrome Cr,
- la surface conductrice (10) de l'élément conducteur électrique (4) présentant un revêtement OSP, et
- lesdites surfaces étant fixées l'une à l'autre.

11. Batterie (200) comprenant
- au moins un module de batterie (100) selon l'une quelconque des revendications précédentes.

12. Batterie selon la revendication 11, étant
- une batterie d'entraînement d'un véhicule entièrement ou partiellement électrique.

13. Batterie selon la revendication 11, étant une batterie d'une source d'électricité fixe.
